# EUROPEAN PATENT SPECIFICATION

(11) **EP 3 117 885 B1**
(45) Date of publication and mention of the grant of the patent: **09.09.2020**
(21) Application number: 16172255.8
(22) Date of filing: 31.05.2016
(51) Int. Cl.: B01D 46/00, B01D 46/42

(54) **VALVE DRIVING SYSTEM FOR THE CLEANING OF INDUSTRIAL FILTERS**
VENTILSTEUERSYSTEM ZUR REINIGUNG VON INDUSTRIEFILTERN
SYSTEME DE COMMANDE DE SOUPAPE DE NETTOYAGE DE FILTRES INDUSTRIELS

(30) Priority: 17.07.2015 IT UB20152277
(43) Date of publication of application: 18.01.2017
(73) Proprietor: AUTEL S.r.l., 41049 Sassuolo (MO) (IT)
(72) Inventor: Mazzacani, Claudio, 41049 Sassuolo (MO) (IT); Camorani, Angelo, 41049 Sassuolo (MO) (IT)
(74) Representative: Grana, Daniele

(56) References cited:
- EP-A1- 2 857 698
- WO-A1-03/035218
- DE-A1-102008 014 866
- US-A1- 2006 086 071

## Description

The present invention relates to an apparatus for the cleaning of industrial filters.

It is known that, in the industrial field, the treatment of the air used during industrial processes is mandatory by law, before its reintroduction into the atmosphere.

In fact, most polluting particles have to be removed and the amount of pollutants per cubic meter of air is generally established by law in the different States.

The polluting particles can be in the solid, liquid or gaseous state.

For the interception of the particles in the solid state, in particular, the most common and efficient system adopted is the sleeve or cartridge filter.

These special filtration systems are also used when powders in the air need to be broken down before reintroducing the air itself in the industrial process (as is the case e.g. of the so-called gas turbine power plants concentrated in areas with a high presence of sand).

The sleeve filter is generally composed of a "dirty" chamber, inside which the sleeves or cartridges are installed, and a "clean" chamber, inside which the devices suitable for the cleaning of the filtering elements are installed.

During the industrial process, the processing air is forced to pass through such filtering elements and the polluting particles are then retained on the outer surface of each filtering element.

Over time there is an accumulation of polluting particles such as to generate a drop in filtering efficiency.

To maintain a high filtering efficiency, a constant cleaning of the filtering elements is therefore required.

The use of suitable systems for the cleaning of industrial filters is therefore known, see for example the patent publications DE 10 2008 014 866 A1, EP 2857698 A1, WO03035218 A1, and US2006086071 A1.

The most widespread system provides for the creation of an instantaneous air flow opposite to the normal processing air flow generated by means of suitable valves known as "pulse jet valves".

Such valves are installed on board tanks which accumulate compressed air and are commonly activated by means of a respective solenoid.

The air flow generated by the valves is routed into the filtering element, causing the same to shake. The polluting particles thus tend to detach from the surface and to precipitate.

A "pulse jet" type valve can generally clean several filtering elements. Different systems for driving these valves are also known.

The most widespread driving system provides for the activation of a pilot valve, installed on the pulse jet valve, by means of the excitation of a solenoid.

This known system therefore provides for the use of an electric cable for each individual pilot valve, starting from the control panel.

Therefore, in the case of large installations with hundreds of valves to be electrically controlled, an individual wiring for each individual valve has to be provided.

This inevitably involves the use of a large number of electrical cables and the need for numerous hours of laying in the plant.

In order to limit these drawbacks, the use is known of a special junction box with the purpose of simplifying and reducing the number of wirings to perform at the construction site on storage tanks.

In this case, the tanks are provided with wiring included between the valve driving solenoid and the junction box. At the construction site the only operation needed is the connection of a multi-cable between the control panel and the terminal board of the junction box. This way the wiring is avoided of each individual connector of the solenoids at the construction site.

Another known system suitable for further reducing costs due to electrical wiring and the hours of work at the construction site, is known as "remote pilot box".

This known system provides for the use of remote-operated pneumatic piloting devices of the valves. Such electronic devices are installed on board the tank and comprise a variable number of pilot valves and relative solenoids. These pilot valves are in turn pneumatically connected to the relative pulse jet valves. The electrical connection, both to power supply and among the remote pilot boxes is performed with two wires. This is possible thanks to the electronic board contained in each remote pilot box, which enables to control all the pilot valves in sequence or with settable cycles.

Even these known solutions, however, do have some drawbacks, in particular due to the greater complexity of the devices used, with consequent higher costs and greater maintenance requirements.

The main aim of the present invention is to devise an apparatus for the cleaning of industrial filters provided with a completely independent valve driving system which results in an effective saving of time and overall costs of installation to the final customer, eliminating the need for external connections or wiring.

Another object of the present invention is to devise an apparatus for the cleaning of industrial filters which recovers part of the pneumatic energy used. Another object of the present invention is to devise an apparatus for the cleaning of industrial filters which recovers part of the energy used for the cleaning of filters.

Another object of the present invention is to devise an apparatus for the cleaning of industrial filters that allows to overcome the mentioned drawbacks of the prior art within the ambit of a simple, rational, easy, effective to use and affordable solution.

The aforementioned objects are achieved by the present apparatus for the cleaning of industrial filters, having the characteristics of claim 1.

Other characteristics and advantages of the present invention will become better evident from the description of a preferred, but not exclusive, embodiment of an apparatus for the cleaning of industrial filters, illustrated by way of an indicative, but non-limiting, example in the accompanying drawings, in which:
Figure 1 and Figure 2 are schematic views illustrating possible apparatus for the cleaning of industrial filters according to the invention;
Figure 3 is a block diagram schematically illustrating a driving unit of a valve driving system of the apparatus according to the invention;
Figure 4 is a block diagram schematically illustrating energy transformation means and energy storage means of the valve driving system of the apparatus according to the invention;
Figure 5 schematically illustrates a further possible variant of the valve driving system of the apparatus according to the invention.

With particular reference to such figures, globally indicated with reference number 1 is a valve driving system of an apparatus for the cleaning of industrial filters.

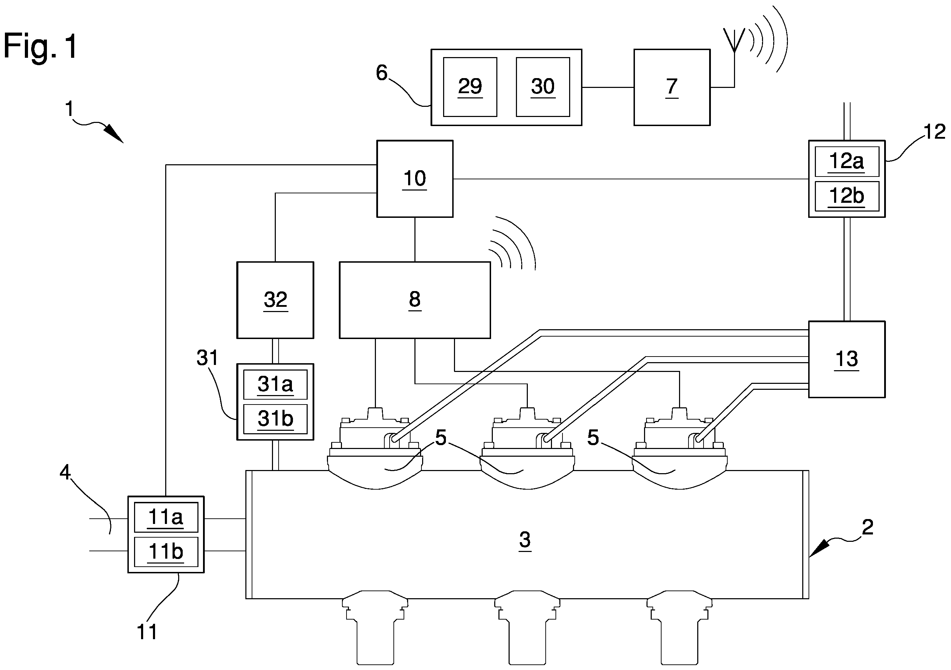

In particular, as highlighted in Figure 1, the system 1 is installable on a conventional apparatus 2 for the cleaning of industrial filters, having a storage tank 3 of compressed air, an air supply duct 4 and a plurality of valves 5 able to generate the air flow for the cleaning of industrial filters.

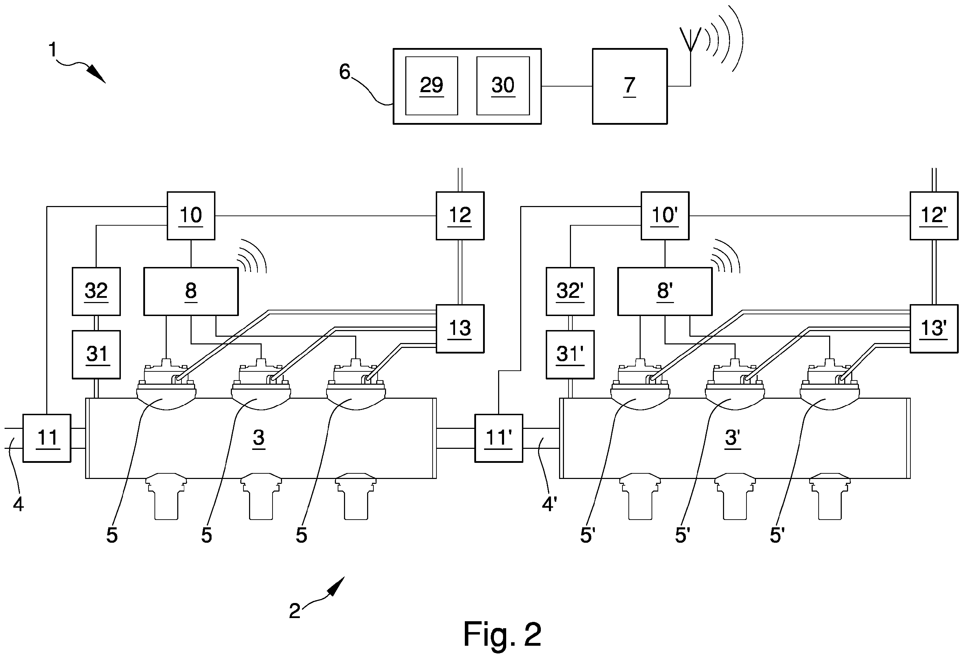

As schematically illustrated in Figure 2, the system 1 according to the invention can be easily installed and used also on apparatuses 2 having several storage tanks 3, 3' connected to one another by respective supply ducts 4' and having respective valves 5, 5'.

Advantageously, the system 1 comprises at least a remote control unit 6.

The remote control unit 6 can e.g. be composed of a suitable dedicated central unit or a PLC (Programmable Logic Controller).

Conveniently, the control unit 6 can have a first radio frequency communication unit 7.

Preferably, the first communication unit 7 is composed of a radio frequency transmission group at 2.4 GHz. The use of different communication frequencies cannot however be ruled out.

The remote control unit 6 is connected to the first radio frequency communication unit 7 via a serial line, e.g. of the RS485 type, and via a power supply line, necessary for the supply of the communication unit itself. Furthermore, the system 1 comprises at least a driving unit 8 of the valves 5 of the apparatus 2 for the cleaning of industrial filters.

As illustrated in Figure 1, the driving unit 8 is operatively connectable to the valves 5 of the apparatus 2 for the cleaning of industrial filters.

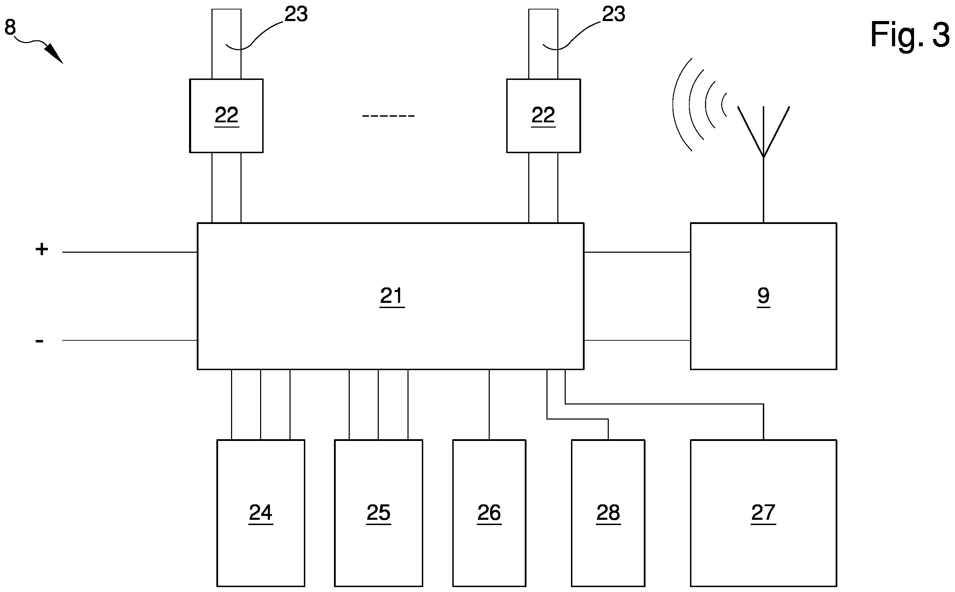

Conveniently, as shown in the diagram of Figure 3, the driving unit 8 can have a second radio frequency communication unit 9 able to communicate with the first communication unit 7.

The use of a different connection, e.g. via cable, between the driving unit 8 and the communication unit 9 cannot however be ruled out.

Preferably, the first communication unit 7 of the remote control unit 6 is positioned in the proximity of the edges of the filter to be cleaned, in the direction of the driving unit 8, so as to optimize the radio frequency transmission, and in order to avoid transmitting with high powers which, besides consuming more energy, could raise issues of international certifications for radio transmissions.

Preferably, the container of the driving unit 8 is made of high temperature plastic material, in order to facilitate the propagation of radio waves. Alternatively, an aluminum container can be used with the insertion of an antenna for the propagation of radio waves which is external to the container itself.

Advantageously, the system 1 comprises storage means 10 of electric energy connected to the driving unit 8, able to supply the driving unit itself.

Furthermore, the system 1 comprises transformation means 11, 12, 31, 33 for transforming pneumatic energy into electric energy, which are connected to the storage means 10 for recharging the same, associable with the apparatus 2 for the cleaning of industrial filters and able to transform the pneumatic energy generated by at least an air flow inside the apparatus 2 into electric energy for the power supply of the driving unit 8.

In particular, the transformation means 11, 12, 31, 33 comprise at least a first transformation device 11 having a first turbine 11a positionable inside a supply duct 4 of compressed air of the apparatus 2 for the cleaning of industrial filters. Preferably, the first turbine 11a is positioned at the supply duct 4 of the storage tank 3 of compressed air of the apparatus 2.

Furthermore, the first transformation device 11 comprises at least a first dynamo 11b associated with the first turbine 11a and connected to the storage means 10. The first dynamo 11b is able to provide energy to the storage means 10 starting from a flow of supply air intercepted by the first turbine 11a inside the supply duct 4 of the apparatus 2.

Moreover, the transformation means 11, 12, 31, 33 can comprise a second transformation device 12 having a second turbine 12a positionable inside at least one duct and/or tank for the recovery of air coming from a secondary membrane of the valve 5 of the apparatus 2.

In particular, with reference to a preferred embodiment shown in the illustrations, the second turbine 12a is arranged inside a recovery tank 13 for the recovery of waste air coming from the secondary membranes of the valves 5.

Furthermore, the second transformation device 12 comprises at least a second dynamo 12b associated with the second turbine 12a and connected to the storage means 10, the second dynamo 12b is able to provide power to the storage means 10 starting from a flow of recovery air coming from the secondary membrane of the valve.

Conveniently, the transformation means 11, 12, 31, 33 can also comprise at least a third transformation device 31 usable in addition or alternatively to the first transformation device 11.

In particular, this third transformation device 31 has a third turbine 31a positionable inside a further supply duct of compressed air connecting the tank 3 to an additional storage tank 32.

Therefore, this third turbine 31a is able to recover part of the pneumatic energy generated by the flow of air that is transferred from the tank 3 to the additional storage tank 32 during the recharging of the tank itself, as well as part of the pneumatic energy generated by the flow of air which is transferred from the additional storage tank 32 to the tank 3 after discharge by means of the valves 5. The third transformation device 31 also comprises at least a third dynamo 31b associated with the third turbine 31a and connected to the storage means 10. The third dynamo 31b is able to provide power to the storage means 10 starting from the flow of air intercepted by the third turbine 31a between the tank 3 and the additional storage tank 32.

According to a possible embodiment, illustrated in the figures, the storage means 10 therefore have three inputs connected to the first dynamo 11b, to the second dynamo 12b and to the third dynamo 31b, respectively.

The storage means 10 comprise at least an adapter circuit 14, 15 connected to the transformation means 11, 12, 31, 33 and able to adapt the input voltage coming from the transformation means 11, 12, 31, 33 so as to generate a stable output voltage.

Conveniently, this at least one adapter circuit 14, 15 controls the variability of the input voltage and the output current.

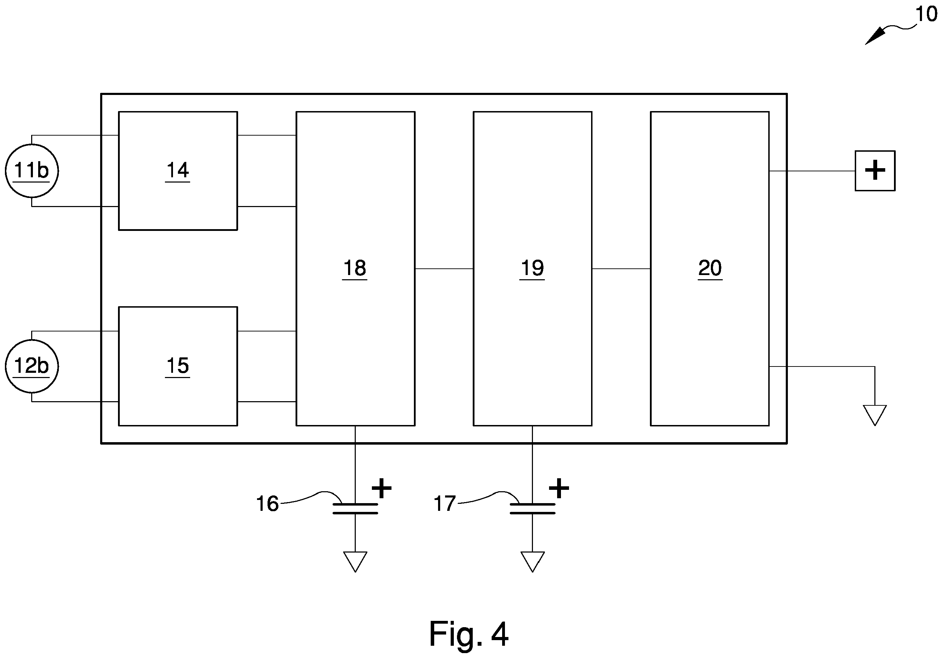

In particular, with reference to a preferred embodiment illustrated in Figure 4, the storage means 10 comprise a first adapter circuit 14 connected to the first dynamo 11b and a second adapter circuit 15 connected to the second dynamo 12b.

Advantageously, the storage means 10 comprise at least one supercapacitor 16 and/or at least a rechargeable battery 17.

Advantageously, according to a preferred embodiment illustrated in the figures, the storage means 10 comprise both a supercapacitor 16 and a battery 17. Preferably, the battery 17 used is the type of a lithium battery.

The storage means 10 comprise a first charge controller circuit 18 connected at input to the first and second adapter circuit 14 and 15 and at output to the supercapacitor 16.

This first charge controller circuit 18 is responsible for generating a constant current to charge the supercapacitor 16.

Moreover, the storage means 10 comprise a second charge controller circuit 19 connected at input to the first charge controller circuit 18 and at output to the lithium battery 17.

This second charge controller circuit 19 is responsible for generating the current necessary for charging the battery 17 and for controlling the voltage values of the battery itself.

It should be noticed that, with respect to the lithium batteries, supercapacitors have the advantage of being charged quickly in a few milliseconds without being damaged, but nevertheless have the drawback of having high leakage currents (which discharge them without the presence a charge) and a poor accumulated energy-volume ratio.

To exploit the aforementioned advantages given by the use of the supercapacitor and at the same time to overcome the limits thereof, the preferred solution which has been illustrated and described thus provides for a first energy storage circuit, consisting of the supercapacitor 16, used to charge a second energy storage circuit, consisting of the lithium battery 17.

With this circuitry the charge of battery 17 can be carried out with a current that will vary according to the energy available in the supercapacitor 16 (or in a set of supercapacitors).

Different solutions cannot however be ruled out involving the use of only one of the storage circuits, supercapacitor 16 or battery 17, or the use of batteries constructed with other technologies currently on the market or of future realization.

Moreover, the storage means 10 comprise a voltage stabilizer circuit 20 connected at input to the second charge controller circuit 19 and at output to the driving unit 8.

Conveniently, all circuits of the storage means 10 described above, as well as all further circuits described below, are made so as to minimize the use of energy during operation.

The driving unit 8 of the valves 5 is composed of a circuit that is responsible for commanding the coils 22 of the electropilots 23 of the valves 5 in the sequence predefined and communicated by the remote control unit 6, with the pause and work time set in the remote control unit itself.

Furthermore, the driving unit 8 is responsible, with the desired operating logic, for the management of digital inputs 24 and analog inputs 25, a relay output 26, a serial line 27 for the connection to a personal computer, a connecting serial line with the second communication unit.

According to a preferred embodiment illustrated in Figure 3, the driving unit 8 comprises at least a management and control unit 21.

Preferably, the management and control unit 21 is composed of a microprocessor.

Conveniently, such microprocessor 21 has characteristics suitable for low-energy operation with reduced consumption.

The driving unit 8 also comprises at least a coil 22 for the actuation of at least a respective electropilot 23 connectable to the valves 5 to be operated. Conveniently, the driving unit 8 comprises at least a digital input 24. Each digital input 21 is usable for the connection to external devices able to provide information of ON/OFF type, such as e.g. a pressure switch.

Furthermore, the driving unit 8 comprises at least an analog input 25. In particular, the analog inputs 25 are usable for the connection to external devices that supply information on the apparatus 2, such as e.g. pressure sensors for the tanks of the apparatus itself.

Conveniently, the driving unit 8 also comprises a relay output 26 usable for local commands in the event of local valves external to the apparatus 2 need to be commanded.

Conveniently, the driving unit 8 also comprises a serial line 27 for the connection to a personal computer. In particular, such a serial line 27 can be made with different technologies, but in any case always with the purpose of keeping consumptions low.

This serial line 27 can be used, e.g., during the lab testing phase and in the field testing phase. Furthermore, it can be used for the reprogramming of the software resident in the microprocessor 21.

The second communication unit 9 is responsible for the connection between the driving unit 8 and the remote control unit 6, so that the command microprocessor 21 receives the control data and sends the status of the system 1. In particular, the communication between the driving unit 8 and the remote control unit 6 cannot be implemented as a simple two-way connection between a Master unit (remote control unit 6) and one or more Slave units (driving unit 8).

The reason is excessive and far from negligible energy consumption that would occur with a continuous transmission between Master and Slave/s.

To overcome this drawback, each driving unit 8 comprises an internal clock 28, while the remote control unit 6 comprises synchronization means 29 for the periodic synchronization of the internal clock 28.

In particular, the synchronization means 29 can be implemented by means of a suitable software program installed in the remote control unit 6.

Therefore, the internal clock 28 of each driving unit 8 is periodically synchronized by the remote control unit 6 through the wireless connection established by means of the first and second communication unit 7 and 9. Conveniently, by inserting inside each driving unit 8 a precise time sequence, the sequential cleaning by means of the activation of the valves 5 is activated through the internal clock 28 only at certain times.

If the internal clocks 28 of all driving units 8 are synchronized, then the sequence of activation of the valves 5 turns out to be the same as a time sequence directly commanded by the remote control unit 6.

Conveniently, in the case of using a very precise internal clock 28, each driving unit 8 can operate without any need for synchronization, and therefore without any wireless connection to the remote control unit 6, also for weeks.

By convention one can assume, e.g., that a synchronization of the internal clock 28 each twenty-four hours can be sufficient.

Moreover, to avoid the use of excessive power by the first communication unit 7 connected to the remote control unit 6 and also by all the second communication units 9 connected to the driving units 8, all driving units 8 will generate an ECHO of the 2.4GHz RF signal at different times.

In this way, it is possible to prevent radio waves overlapping which could rise problems to the propagation of the signal. In this way, low power is sufficient for the synchronization signal and the different communication signals to also travel over long distances.

Conveniently, the remote control unit 6 comprises transmission means 30 of at least a string of data relating to a new configuration of at least one of the driving units and/or to command instructions of at least one of the driving units.

In particular, the transmission means 30 can be implemented by means of a suitable software program installed in the remote control unit 6.

In the same way each driving unit 8 can send to the remote control unit 6 strings of data relating to the status of the piloting unit itself and/or to alarms or other. The implementation of the communications between the remote control unit 6 and the driving unit 8 according to a Master/Slave model cannot however be ruled out.

It should be noticed that, as illustrated in Figure 2, in the event of the apparatus 2 to be controlled having several storage tanks 3, 3' connected to one another by respective supply ducts 4' and having respective valves 5, 5', then the system 1 provides, for each tank 3, 3', respective driving units 8, 8', storage means 10, 10', transformation means 11, 12, 31, 33, 11', 12'.

In this case, all driving units 8, 8' can be commanded by a single remote control unit 6.

Advantageously, the system 1 therefore allows to considerably reduce the installation costs for the final customer by creating tanks 3 with associated valves 5 of the pulse jet type which do not require for any electrical wiring, so without cables between the external power supply line and each driving unit 8 (powerless), and without connections between the driving units 8 and the remote control unit 6 (connectionless).

The solenoids 22 of the driving units 8 are therefore supplied by means of integrated (or even external) supercapacitors 16 and/or storage batteries 17, while for recharging the batteries is exploited the pneumatic energy circulating in the apparatus 2 for the cleaning of industrial filters.

In particular, a first source of energy that is recovered is that contained in the compressed air that is expelled from the secondary membrane of each valve 5 of the pulse jet type.

Normally, this air is expelled into the environment, while in this case it is instead channeled into suitable ducts and intercepted by the second turbine 12a, which by means of the relative second dynamo 12b is able to produce energy intended to recharge the battery 17.

The second source of energy is obtained by inserting the first dynamo 11a between two storage tanks 3, 3' or anyway upstream of a single storage tank 3.

At each firing of one of the valves 5, the relative tank 3, 3' undergoes an abrupt pressure drop. The compressed air of the adjacent tank 3, 3' therefore starts to move and creates an air flow. The first dynamo 11b' installed between the two tanks 3, 3' is actuated by this passage of air, producing energy intended to recharge the batteries 17.

A further source of energy can be that generated by the third dynamo 31b, actuated by the passage of an air flow between each of the tanks 3, 3' and corresponding additional storage tanks 32, 32'.

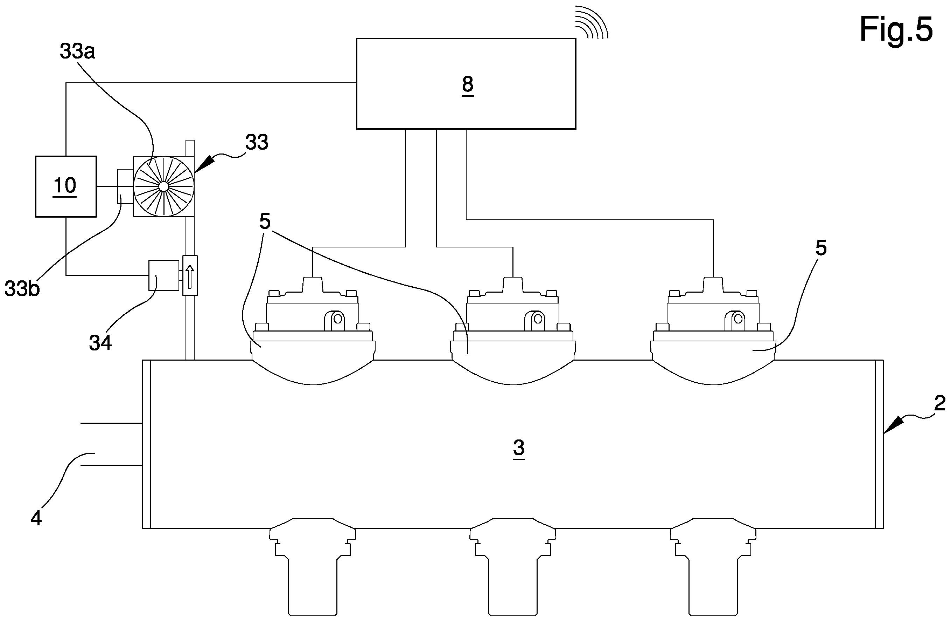

With reference to a further possible embodiment of the system 1, shown schematically in Figure 5, the transformation means 11, 12, 31, 33 for the transformation of pneumatic energy into electric energy comprise a fourth transformation device 33.

The fourth transformation device 33 can be used in addition or alternatively to the first, second and third transformation device 11, 12, 31.

In particular, the fourth transformation device 33 comprises a fourth turbine 33a connected to the tank 3 by interposition of a normally closed valve 34.

In addition, the fourth transformation device 33 comprises at least a fourth dynamo 33b associated with the fourth turbine 33a and connected to the storage means 10.

The fourth dynamo 33b is able to provide energy to the storage means 10 starting from an air flow coming from the tank 3.

Moreover, the storage means 10 are operatively connected to the valve 34.

In particular, the fourth turbine 33a is directly supplied from the tank 3 through the normally closed valve 34. The air used by the fourth turbine 33a is then discharged into the atmosphere.

Advantageously, in the event of the level of charge of the storage means 10 falling below a predefined minimum level, the storage means 10 themselves command the opening of the normally closed valve 34.

Subsequently, when the level of charge of the storage means 10 reaches a desired level, the storage means 10 command the closing of the valve 34.

The valve 34 is, on the contrary, never opened in the event of the pressure inside the tank being below a predefined minimum value (e.g. in case of downtime for plant maintenance).

It has in practice been observed that the described invention achieves the intended objects.

## Claims

1. Apparatus (2) for the cleaning of industrial filters, comprising at least a storage tank (3) of compressed air, at least an air supply duct (4), at least one valve (5, 5') configured to generate an air flow for the cleaning of industrial filters, and a valve driving system (1) comprising:
- at least a remote control unit (6);
- at least a driving unit (8, 8') operatively connected to said at least one valve (5, 5');
**characterized in that** said valve driving system (1) comprises:
- storage means (10, 10') of electric energy connected to said driving unit (8, 8');
- transformation means (11, 12, 31, 11', 12', 31', 33) for transforming pneumatic energy into electric energy, which are connected to said storage means (10, 10') and which are configured to transform the pneumatic energy generated by at least one said air flow inside said apparatus (2) into electric energy for powering said driving unit (8, 8').

2. Apparatus (2) according to claim 1, **characterized in that** said remote control unit (6) has at least a first radio frequency communication unit (7) and **in that** said driving unit (8, 8') has at least a second radio frequency communication unit (9) configured to communicate with said first communication unit (7).

3. Apparatus (2) according to one or more of the preceding claims, **characterized in that** said transformation means (11, 12, 31, 11', 12', 31', 33) comprise at least a first turbine (11a) positioned inside said at least one air supply duct (4, 4') and at least a first dynamo (11b) associated with said first turbine (11a) and connected to said storage means (10, 10'), said first dynamo (11b) being configured to provide power to said storage means (10, 10') starting from a flow of supply air of said apparatus (2) for the cleaning of industrial filters.

4. Apparatus (2) according to one or more of the preceding claims, **characterized in that** it comprises at least one duct and/or tank (13, 13') for the recovery of air from a secondary membrane of said valve (5, 5'), and **in that** said transformation means (11, 12, 31, 11', 12', 31', 33) comprise at least a second turbine (12a) positioned inside said at least one duct and/or tank (13, 13') and at least a second dynamo (12b) associated with said second turbine (12a) and connected to said storage means (10, 10'), said second dynamo (12b) being configured to provide power to said storage means (10, 10') starting from a flow of recovery air coming from said secondary membrane of the valve (5, 5').

5. Apparatus (2) according to one or more of the preceding claims, **characterized in that** it comprises a supply duct of compressed air connected to an additional storage tank (32), and **in that** said transformation means (11, 12, 31, 11', 12', 31', 33) comprise at least a third turbine (31a) positioned inside said supply duct of compressed air connected to the additional storage tank (32)and at least a third dynamo (31b) associated with said third turbine (31a) and connected to said storage means (10, 10'), said third dynamo (31b) being configured to provide power to said storage means (10, 10') starting from a flow of air from/to said additional storage tank (32).

6. Apparatus (2) according to one or more of the preceding claims, **characterized in that** said transformation means (11, 12, 31, 33) comprise at least a fourth turbine (33a) operatively connected to said storage tank (3), at least a fourth dynamo (33b) associated with said fourth turbine (33a) and connected to said storage means (10), and at least a normally closed valve (34) positioned between said storage tank (3) and said fourth turbine (33a) and operatively connected to said storage means (10).

7. Apparatus (2) according to one or more of the preceding claims, **characterized in that** said storage means (10, 10') comprise at least an adapter circuit (14, 15) connected to said transformation means (11, 12, 31, 11', 12', 31', 33) and configured to adapt the input voltage coming from said transformation means (11, 12, 31, 11', 12', 31'), so as to generate a stable output voltage.

8. Apparatus (2) according to one or more of the preceding claims, **characterized in that** said storage means (10, 10') comprise at least a supercapacitor (16) and/or at least a rechargeable battery (17).

9. Apparatus (2) according to one or more of the preceding claims, **characterized in that** said storage means (10, 10') comprise at least a first charge controller circuit (18) connected at input to said transformation means (11, 12, 31, 11', 12', 31', 33) and at output to said supercapacitor (16).

10. Apparatus (2) according to one or more of the preceding claims, **characterized in that** said storage means (10, 10') comprise at least a second charge controller circuit (19) connected at input to said first charge controller circuit (18) and at output to said battery (17).

11. Apparatus (2) according to one or more of the preceding claims, **characterized in that** said storage means (10, 10') comprise at least a voltage stabilizer circuit (20) connected to said driving unit (8, 8').

12. Apparatus (2) according to one or more of the preceding claims, **characterized in that** said driving unit (8, 8') comprises at least a management and control unit (21).

13. Apparatus (2) according to one or more of the preceding claims, **characterized in that** said driving unit (8, 8') comprises at least an internal clock (28) and **in that** said remote control unit comprises synchronization means (29) for the periodic synchronization of said internal clock (28).

14. Apparatus (2) according to one or more of the preceding claims, **characterized in that** said remote control unit (6) comprises transmission means (30) of at least a string of data relating to a new configuration of said driving unit (8, 8') and/or to command instruction of said driving unit (8, 8').

## Patentansprüche

1. Vorrichtung (2) für die Reinigung von Industriefiltern, umfassend mindestens einen Speicherbehälter (3) für Druckluft, mindestens einen Luftzufuhrkanal (4), mindestens ein Ventil (5, 5'), das so konfiguriert ist, dass es einen Luftstrom für die Reinigung von Industriefiltern erzeugt, und ein Ventilantriebssystem (1), umfassend:
- mindestens eine Fernsteuereinheit (6);
- mindestens eine Antriebseinheit (8, 8'), die operativ mit dem mindestens einen Ventil (5, 5') verbunden ist;
**dadurch gekennzeichnet, dass** das Ventilantriebssystem (1) umfasst:
- Speichermittel (10, 10') für elektrische Energie, die mit der genannten Antriebseinheit (8, 8') verbunden sind;
- Umwandlungsmittel (11, 12, 31, 11', 12', 31', 33) zum Umwandeln pneumatischer Energie in elektrische Energie, die mit den Speichermitteln (10, 10') verbunden sind und die so konfiguriert sind, dass sie die pneumatische Energie, die von mindestens einem Luftstrom im Inneren der Vorrichtung (2) erzeugt wird, in elektrische Energie zum Antreiben der Antriebseinheit (8, 8') umwandeln.

2. Vorrichtung (2) nach Anspruch 1, **dadurch gekennzeichnet, dass** die Fernsteuereinheit (6) mindestens eine erste Radiofrequenz-Kommunikationseinheit (7) aufweist und dass die Antriebseinheit (8, 8') mindestens eine zweite Radiofrequenz-Kommunikationseinheit (9) aufweist, die so konfiguriert ist, dass sie mit der ersten Kommunikationseinheit (7) kommuniziert.

3. Vorrichtung (2) gemäß einem oder mehreren der vorhergehenden Ansprüche, **dadurch gekennzeichnet, dass** die Umwandlungsmittel (11, 12, 31, 11', 12', 31', 33) mindestens eine erste Turbine (11a), die innerhalb des mindestens einen Luftzufuhrkanals (4, 4') angeordnet ist und mindestens einen ersten Dynamo (11b), der der ersten Turbine (11a) zugeordnet und mit den Speichermitteln (10, 10') verbunden ist, umfassen, wobei der erste Dynamo (11b) so konfiguriert ist, dass er die Speichermittel (10, 10') mit Energie versorgt, ausgehend von einem Strom von Zuluft der Vorrichtung (2) für die Reinigung von Industriefiltern.

4. Vorrichtung (2) gemäß einem oder mehreren der vorhergehenden Ansprüche, **dadurch gekennzeichnet, dass** sie mindestens einen Kanal und/oder einen Behälter (13, 13') für die Rückgewinnung von Luft von einer Sekundärmembran des Ventils (5, 5') umfasst, und dass die Umwandlungsmittel (11, 12, 31, 11', 12', 31', 33) mindestens eine zweite Turbine (12a) umfassen, die im Inneren des mindestens einen Kanals und/oder Behälters (13, 13') angeordnet ist, und mindestens einen zweiten Dynamo (12b), der der zweiten Turbine (12a) zugeordnet und mit den Speichermitteln (10, 10') verbunden ist, wobei der zweite Dynamo (12b) so konfiguriert ist, dass er die Speichermittel (10, 10') mit Energie versorgt, ausgehend von einem Strom von Rückgewinnungsluft, die von der Sekundärmembran des Ventils (5, 5') kommt.

5. Vorrichtung (2) gemäß einem oder mehreren der vorhergehenden Ansprüche, **dadurch gekennzeichnet, dass** sie einen Zufuhrkanal für Druckluft umfasst, der mit einem zusätzlichen Speicherbehälter (32) verbunden ist und dass die Umwandlungsmittel (11, 12, 31, 11', 12', 31', 33) mindestens eine dritte Turbine (31a) umfassen, die innerhalb des Zufuhrkanals für Druckluft, der mit einem zusätzlichen Vorratsbehälter (32) verbunden ist, angeordnet ist, und mindestens einen dritten Dynamo (31b), der der dritten Turbine (31a) zugeordnet und mit den Speichermitteln (10, 10') verbunden ist, wobei der dritte Dynamo (31b) so konfiguriert ist, dass er die Speichermittel (10, 10') mit Energie versorgt, ausgehend von einem Luftstrom von/zudem zusätzlichen Speicherbehälter (32).

6. Vorrichtung (2) gemäß einem oder mehreren der vorhergehenden Ansprüche, **dadurch gekennzeichnet, dass** die Umwandlungsmittel (11, 12, 31, 33) mindestens eine vierte Turbine (33a) umfassen, die betriebsmäßig mit dem Speicherbehälter (3) verbunden ist, mindestens einen vierten Dynamo (33b), der der vierten Turbine (33a) zugeordnet und mit den Speichermitteln (10) verbunden ist, und mindestens ein normalerweise geschlossenes Ventil (34), das zwischen dem Speicherbehälter (3) und der vierten Turbine (33a) angeordnet und betriebsmäßig mit den Speichermitteln (10) verbunden ist.

7. Vorrichtung (2) nach einem oder mehreren der vorhergehenden Ansprüche, **dadurch gekennzeichnet, dass** die Speichermittel (10, 10') mindestens eine Anpassungsschaltung (14, 15) umfassen, die mit den Umwandlungsmitteln (11, 12, 31, 11', 12', 31', 33) verbunden und so konfiguriert ist, dass sie die von den Umwandlungsmitteln (11, 12, 31, 11', 12', 31') kommende Eingangsspannung anpasst, um eine stabile Ausgangsspannung zu erzeugen.

8. Vorrichtung (2) nach einem oder mehreren der vorstehenden Ansprüche, **dadurch gekennzeichnet, dass** die Speichermittel (10, 10') mindestens einen Superkondensator (16) und/oder mindestens eine wiederaufladbare Batterie (17) umfassen.

9. Vorrichtung (2) nach einem oder mehreren der vorhergehenden Ansprüche, **dadurch gekennzeichnet, dass** die Speichermittel (10, 10') mindestens eine erste Ladungssteuerschaltung (18) umfassen, die am Eingang mit den Umwandlungsmitteln (11, 12, 31, 11', 12', 31', 33) und am Ausgang mit dem Superkondensator (16) verbunden ist.

10. Vorrichtung (2) nach einem oder mehreren der vorstehenden Ansprüche, **dadurch gekennzeichnet, dass** die Speichermittel (10, 10') mindestens eine zweite Ladungssteuerschaltung (19) umfassen, die am Eingang mit der ersten Ladungssteuerschaltung (18) und am Ausgang mit der Batterie (17) verbunden ist.

11. Vorrichtung (2) nach einem oder mehreren der vorstehenden Ansprüche, **dadurch gekennzeichnet, dass** die Speichermittel (10, 10') mindestens eine Spannungsstabilisierungsschaltung (20) umfassen, die mit der Antriebseinheit (8, 8') verbunden ist.

12. Vorrichtung (2) nach einem oder mehreren der vorstehenden Ansprüche, **dadurch gekennzeichnet, dass** die Antriebseinheit (8, 8') mindestens eine Verwaltungs- und Steuereinheit (21) umfasst.

13. Vorrichtung (2) nach einem oder mehreren der vorhergehenden Ansprüche, **dadurch gekennzeichnet, dass** die Antriebseinheit (8, 8') mindestens einen internen Taktgeber (28) umfasst und dass die Fernsteuereinheit Synchronisationsmittel (29) zur periodischen Synchronisation des internen Taktgebers (28) umfasst.

14. Vorrichtung (2) nach einem oder mehreren der vorhergehenden Ansprüche, **dadurch gekennzeichnet, dass** die Fernsteuereinheit (6) Übertragungsmittel (30) für mindestens eine Kette von Daten umfasst, die sich auf eine neue Konfiguration der Antriebseinheit (8, 8') und/oder auf eine Befehlsanweisung der Antriebseinheit (8, 8') bezieht.

## Revendications

1. Appareil (2) pour le nettoyage de filtres industriels, comprenant au moins un réservoir de stockage (3) d'air comprimé, au moins une conduite d'admission d'air (4), au moins une soupape (5, 5') configurée pour générer un écoulement d'air pour le nettoyage de filtres industriels, et un système de commande de soupapes (1) comprenant :
- au moins une unité de contrôle à distance (6) ;
- au moins une unité de commande (8, 8') connectée de manière fonctionnelle à ladite au moins une soupape (5, 5') ;
**caractérisé en ce que** ledit système de commande de soupapes (1) comprend :
- des moyens de stockage (10, 10') d'énergie électrique connectés à ladite unité de commande (8, 8') ;
- des moyens de transformation (11, 12, 31, 11', 12', 31', 33) permettant de transformer de l'énergie pneumatique en énergie électrique, qui sont connectés auxdits moyens de stockage (10, 10') et qui sont configurés pour transformer l'énergie pneumatique générée par au moins un dit écoulement d'air dans ledit appareil (2) en énergie électrique pour alimenter ladite unité de commande (8, 8').

2. Appareil (2) selon la revendication 1, **caractérisé en ce que** ladite unité de contrôle à distance (6) a au moins une première unité de communication (7) radiofréquence et **en ce que** ladite unité de commande (8, 8') a au moins une seconde unité de communication (9) radiofréquence configurée pour communiquer avec ladite première unité de communication (7).

3. Appareil (2) selon une ou plusieurs des revendications précédentes, **caractérisé en ce que** lesdits moyens de transformation (11, 12, 31, 11', 12', 31', 33) comprennent au moins une première turbine (11a) positionnée dans ladite au moins une conduite d'admission d'air (4, 4') et au moins une première dynamo (11b) associée à ladite première turbine (11a) et connectée auxdits moyens de stockage (10, 10'), ladite première dynamo (11b) étant configurée pour fournir une alimentation auxdits moyens de stockage (10, 10') à partir d'un écoulement d'air d'admission dudit appareil (2) pour le nettoyage de filtres industriels.

4. Appareil (2) selon une ou plusieurs des revendications précédentes, **caractérisé en ce qu'**il comprend au moins un(e) conduite et/ou réservoir (13, 13') pour la récupération d'air à partir d'une membrane secondaire de ladite soupape (5, 5'), et **en ce que** lesdits moyens de transformation (11, 12, 31, 11', 12', 31', 33) comprennent au moins une deuxième turbine (12a) positionnée dans ladite/ledit au moins un(e) conduite et/ou réservoir (13, 13') et au moins une deuxième dynamo (12b) associée à ladite deuxième turbine (12a) et connectée auxdits moyens de stockage (10, 10'), ladite deuxième dynamo (12b) étant configurée pour fournir une alimentation auxdits moyens de stockage (10, 10') à partir d'un écoulement d'air de récupération provenant de ladite membrane secondaire de la soupape (5, 5').

5. Appareil (2) selon une ou plusieurs des revendications précédentes, **caractérisé en ce qu'**il comprend une conduite d'admission d'air comprimé connectée à un réservoir de stockage supplémentaire (32), et **en ce que** lesdits moyens de transformation (11, 12, 31, 11', 12', 31', 33) comprennent au moins une troisième turbine (31a) positionnée dans ladite conduite d'admission d'air comprimé connectée au réservoir de stockage supplémentaire (32) et au moins une troisième dynamo (31b) associée à ladite troisième turbine (31a) et connectée auxdits moyens de stockage (10, 10'), ladite troisième dynamo (31b) étant configurée pour fournir une alimentation auxdits moyens de stockage (10, 10') à partir d'un écoulement d'air depuis/vers ledit réservoir de stockage supplémentaire (32).

6. Appareil (2) selon une ou plusieurs des revendications précédentes, **caractérisé en ce que** lesdits moyens de transformation (11, 12, 31, 33) comprennent au moins une quatrième turbine (33a) connectée de manière fonctionnelle audit réservoir de stockage (3), au moins une quatrième dynamo (33b) associée à ladite quatrième turbine (33a) et connectée audit moyen de stockage (10), et au moins une soupape normalement fermée (34) positionnée entre ledit réservoir de stockage (3) et ladite quatrième turbine (33a) et connectée de manière fonctionnelle audit moyen de stockage (10).

7. Appareil (2) selon une ou plusieurs des revendications précédentes, **caractérisé en ce que** lesdits moyens de stockage (10, 10') comprennent au moins un circuit adaptateur (14, 15) connecté auxdits moyens de transformation (11, 12, 31, 11', 12', 31', 33) et configuré pour adapter la tension d'entrée provenant desdits moyens de transformation (11, 12, 31, 11', 12', 31'), de manière à générer une tension de sortie stable.

8. Appareil (2) selon une ou plusieurs des revendications précédentes, **caractérisé en ce que** lesdits moyens de stockage (10, 10') comprennent au moins un supercondensateur (16) et/ou au moins une batterie rechargeable (17).

9. Appareil (2) selon une ou plusieurs des revendications précédentes, **caractérisé en ce que** lesdits moyens de stockage (10, 10') comprennent au moins un premier circuit de dispositif de contrôle de charge (18) connecté au niveau d'une entrée auxdits moyens de transformation (11, 12, 31, 11', 12', 31', 33) et au niveau d'une sortie audit supercondensateur (16).

10. Appareil (2) selon une ou plusieurs des revendications précédentes, **caractérisé en ce que** lesdits moyens de stockage (10, 10') comprennent au moins un second circuit de dispositif de contrôle de charge (19) connecté au niveau d'une entrée audit premier circuit de dispositif de contrôle de charge (18) et au niveau d'une sortie à ladite batterie (17).

11. Appareil (2) selon une ou plusieurs des revendications précédentes, **caractérisé en ce que** lesdits moyens de stockage (10, 10') comprennent au moins un circuit de stabilisateur de tension (20) connecté à ladite unité de commande (8, 8').

12. Appareil (2) selon une ou plusieurs des revendications précédentes, **caractérisé en ce que** ladite unité de commande (8, 8') comprend au moins une unité de gestion et de contrôle (21).

13. Appareil (2) selon une ou plusieurs des revendications précédentes, **caractérisé en ce que** ladite unité de commande (8, 8') comprend au moins une horloge interne (28) et **en ce que** ladite unité de contrôle à distance comprend un moyen de synchronisation (29) pour la synchronisation périodique de ladite horloge interne (28).

14. Appareil (2) selon une ou plusieurs des revendications précédentes, **caractérisé en ce que** ladite unité de contrôle à distance (6) comprend un moyen de transmission (30) d'au moins une chaîne de données relative à une nouvelle configuration de ladite unité de commande (8, 8') et/ou à une instruction de pilotage de ladite unité de commande (8, 8').
